Europäisches Patentamt

European Patent Office

Office européen des brevets

(19)

(11) Publication number: **0 134 982**
**B1**

# EUROPEAN PATENT SPECIFICATION

(45) Date of publication of patent specification: **16.03.88**

(21) Application number: **84107945.2**

(22) Date of filing: **06.07.84**

(51) Int. Cl.⁴: **H 01 M 2/12,** H 01 M 2/04,
H 01 M 6/08

(54) Sealed galvanic cell and method of producing it.

(30) Priority: **08.07.83 US 511910**

(43) Date of publication of application:
**27.03.85 Bulletin 85/13**

(45) Publication of the grant of the patent:
**16.03.88 Bulletin 88/11**

(84) Designated Contracting States:
**DE FR GB**

(56) References cited:
**FR-A-1 213 467
FR-A-2 349 966
GB-A-1 039 043
US-A-2 879 315
US-A-3 116 172
US-A-3 318 737
US-A-3 802 923
US-A-4 063 902**

(73) Proprietor: **EVEREADY BATTERY COMPANY,
INC.
Checkerboard Square
St. Louis Missouri 63164 (US)**

(72) Inventor: **Malay, Manuel Rafols
3703 Applewood Drive
Brunswick, OH 44212 (US)**

(74) Representative: **Görtz, Dr. Fuchs, Dr.
Luderschmidt Patentanwälte
Sonnenberger Strasse 100 Postfach 26 26
D-6200 Wiesbaden (DE)**

Courier Press, Leamington Spa, England.

EP 0 134 982 B1

## Description

Field of the Invention

This invention relates to cylindrical galvanic cells and more specifically to galvanic cells having a compact resealable vent comprising the inwardly turned peripheral edge portion of the cell container and a closure member having a resilient peripheral lip and a resilient annular flange, the construction of which resealable vent allows for increased amounts of reactive material to be placed within the cell container.

Background of the Invention

Under certain conditions galvanic cells may generate large quantities of gas. As three cells are sealed in order to prevent loss of electrolyte, such gas generation may result in the formation of high pressures within such cells. If such high pressures are not vented, cell leakage, bulging and/or rupture may occur.

In the past many approaches have been adopted for releasing the internal pressure which may build up in galvanic cells. In general, it is preferable to employ resealable venting means in order to avoid drying out of the electrolyte and to prevent the ingress of oxygen from the atmosphere which can cause wasteful corrosion of the anode. One significant drawback encountered with several of the prior art resealable vents has been that they require the addition of several or more parts in the dry cell and thus can greatly increase the cost of manufacture. Additionally, these prior art approaches frequently require that these additional parts must be accurately positioned during cell assembly if reliable and reproducible results are to be obtained.

Among the resealable venting means developed in the prior art to overcome the above-described drawbacks are the dry cell constructions disclosed in US—A—3,802,923 and in US—A—4,146,681, US—A—3,802,923 discloses a "rim vent" seal closure for the open end of a cell comprising a cover including an annular depending flange which has a circumferential notch for engaging the inwardly turned peripheral edge of the cell and a resilient sealing lip which resides on the curled over top portion of the container.

US—A—4,146,681 discloses an improved version of such cover wherein an annular recess is located in the cover, which recess extends below the level of the notch, and a locking collar is inserted into such recess.

Although the seal closures of the above patents function admirably, such seals require a large crimp radius. As a result the cell volume is not fully utilized and cathode mix height is not maximized.

It is therefore an object of this invention to provide a resealable vent closure for use in a galvanic dry cell.

Another object of this invention is to provide a resealable vent closure which requires a minimum number of parts and which is therefore easy to assemble and inexpensive to manufacture.

An additional object of this invention is to provide a resealable vent closure which will permit a maximum amount of active material to be placed inside the cell container.

Still another object of the invention is to provide a method for the production of galvanic cells which possess a resealable vent closure.

The foregoing and additional objects will become more fully apparent from the following description and the accompanying drawing.

Summary of the Invention

This inventionm relates to a galvanic cell comprising a cylindrical container having a closed end, an open end and an upstanding wall with an inwardly turned peripheral edge portion, said edge portion having an inner surface and an outer surface, said container including therein electrochemically active ingredients; and a closure member disposed over the open end of said container, said closure member comprising a resilient annular flange extending toward the closed end of said container, said flange defining an outer circumferential notch and being positioned such that the inwardly turned peripheral edge portion of the container is inserted into such circumferential notch; characterized in that the inwardly turned peripheral edge portion of the container is inwardly crimped with a crimp radius of about 0.16 cm at an angle of between about 85° and about 95°, preferably about 90°, relative to the upstanding wall of the container, and said closure member further comprises an outer sealing lip which extends substantially parallel to and is in contiguous sealing relationship with the outer surface of the inwardly turned peripheral edge portion of the container, said lip having an inner face and defining a circumferential groove in said inner face, such that the sealing lip and inwardly turned peripheral edge portion of the container comprise a resealable venting means operable in that the buildup of pressure inside the cell beyond a predetermined limit will cause said sealing lip to momentarily deflect, thereby permitting the release of such pressure from inside the cell.

In another aspect this invention relates to a method for the production of galvanic cells having a resealable vent closure as defined above, comprising the steps of:

(a) assembling within a cylindrical container having an open end, a closed end and an upstanding wall, the electrochemically active ingredients of the cell;

(b) inwardly crimping the peripheral edge portion of said cylindrical container such that said peripheral edge portion is inwardly turned with a crimp radius of about 0.16 cm at an angle of between about 85° and

2

**0 134 982**

about 95° relative to the upstanding wall of the container, such that said peripheral edge portion has an inner and an outer surface;

(c) providing a closure member comprising a resilient annular flange and a sealing lip having an inner face; said flange defining an outer circumferential notch, said sealing lip defining in its inner face a circumferential groove; and

(d) locking said closure member into place by inserting it over the open end of said cylindrical container such that the end of the inwardly turned peripheral edge portion of the cell container is fitted into the circumferential notch on said flange such that said sealing lip extends substantially parallel to and is in contiguous sealing relationship with the outer surface of the inwardly turned peripheral edge portion of the container.

It is to be noted that the inward crimping of the peripheral edge portion of the cell container may involve a multiple-step procedure — i.e. the container could be partially inwardly crimped, the closure member positioned over the open end of the container, and the closure member locked into place by completing the crimping of the cell so that the peripheral edge portion of the container is at an angle of between about 85° and 95° relative to the sidewall of the container with the crim radius of about 0.16 cm. Thus in another particularly preferred embodiment this invention relates to a method for the production of galvanic cells having a resealable vent closure as defined above, comprising the steps of:

(a) assembling within a cylindrical container having an open end, a closed end and an upstanding wall the electrochemically active ingredients of the cell;

(b) inwardly crimping the peripheral edge portion of said cylindrical container with a crimp radius of about 0.16 cm such that said peripheral edge portion is inwardly turned at an angle of between about 30° and about 60° relative to the upstanding wall of the container;

(c) providing a closure member comprising a resilient annular flange, and a sealing lip having an inner face; said flange defining an outer circumferential notch, said sealing lip defining in its inner face a circumferential groove; and

(d) locking said closure member into place by inserting it over the crimped peripheral edge portion of the cylindrical container and further crimping said peripheral edge portion with a crimp radius of about 0.16 cm such that said peripheral portion is inwardly turned at any angle of between about 85° and about 95° relative to the upstanding wall of the container such that said peripheral edge portion has an inner and an outer surface and such that the end of the inwardly turned peripheral edge portion of the cell container is fitted into the circumferential notch on said flange such that said sealing lip extends substantially parallel to and is in continous sealing relationship with the outer surface of the inwardly turned peripheral edge portion of the container.

Most preferably the cell container is inwardly crimped at an angle of about 45° relative to the upstanding wall of the container in step (b). As will be apparent to one skilled in the art, the outer portion of the container sidewall in the area of the crimp should be restrained to avoid bulging at that point.

The raw cell produced by the process of this invention may then be finished by locking an outer jacket to conventional covers.

The closure member of this invention is composed of a resiliently deformable plastic such as nylon, polyethylene or polypropylene. Typically, the closure member is molded in a one-piece construction utilizing conventional molding techniques well known to those skilled in the art.

The closure member may be molded defining a central hole such that an electrode such as a carbon rod can be force-fitted through said closure member. The seal around the electrode may be assisted by silicone grease or other sealant or adhesive-type material. In some embodiments of this invention the closure member will comprise an inner circular flanged hub about such central hole.

The resilient annular flange of the closure member defines an annular notch in its outer side wall. This flange is positioned such that this notch engages the inner edge on the inwardly crimped peripheral edge of the cell container thereby locking the cover in place and forming a seal juncture therewith. This seal juncture is made tight enough to retard the outward free flow of liquidd spew but is not made so tight as to preclude the passage of gas therethrough.

In order to enhance the effectiveness of the fluid-tight seal, a thin layer of non-hardening and non-melting grease may be applied to the outer surface of the inwardly crimped peripheral edge portion of the cell container. This thin layer of grease also repels moisture and serves as a lubricant to aid in the assembly of the cell closure.

The peripheral sealing lip of the closure member defines a circumferential groove in its inner surface. In some embodiments of this invention one or more radial indentations are provided in the outer face of the sealing lip. These indentations assist the cell to vent when inner gas pressure builds up. Since the lip seal is thinner and is not in contact with the top cover where the indentations are, gas pressure can flex these thin areas up and vent the cell without stretching the jacket.

The periphery of the sidewall of the cylindrical cell container, which in cells of the Leclanche or zinc chloride type may be composed of the consumable (zinc) anode, is crimped inward to form a flattened flange. The crimp radius for the about 85° to about 95° angle bend is about $\frac{1}{16}$ inch (about 0.16 cm). Because of this crimping, the initial height of the cylindrical container should be increased to compensate for the inwardly crimped peripheral edge.

The cells of this invention are typically prepared as follows. The cell's active materials along with a

3

separator and electrolyte are assembled in a cylindrical container. In certain cell systems, such as those of the Leclanche or zinc chloride type, the cylindrical container may be an anode of a consumable metal, such as zinc. The peripheral edge portion of the cylindrical container is crimped inward at an angle of between 85° and about 95° relative to the upstanding wall of the container. The closure member is then placed over the open end of the cell container and is snapped into position such that the peripheral edge portion of the cell container is inserted into the groove located on the outer wall of the annular flange of the closure member. Alternatively and preferably, the peripheral edge portion of the container could be inwardly crimped part way, preferably about 45° relative to the upstanding wall of the container, the closure member inserted, and the crimping completed such that the peripheral edge portion of the cell container is at an angle of bewteen about 85° and 95° relative to the upstanding wall of the container. The raw cell so formed is then finished by locking conventional top and bottom covers to an outer jacket placed around the cell. The top cover may serve the additional function of pressing the sealing lip of the closure member against the outer surface of the turned-in portion of the cylindrical container.

In the design of a particular low profile seal, there are a number of variables which must be taken into account. The pressure required for the sealing lip to deflect, thus allowing excess pressure to be released from the cell, is dependent upon the physical properties of the closure member material as well as upon the dimensions of the particular closure member involved.

In addition, the pressure required for the cells of this invention to vent may also depend upon the composition of the outer jacket (if such jacket is employed) as well as the amount of force exerted by the cell cover against the closure member. Thus, a loosely fitted cell cover (i.e. one which does not exert force against the closure member) will not affect the venting pressure whereas a tightly fitted cover will increase the venting pressure. The extent to which a tightly fitted cover will increase the venting pressure will depend in part upon the composition of the outer jacket. A rigid steel jacket can greatly increase the venting pressure whereas a yielding paper jacket will increase the venting pressure to a lesser degree.

When a metal outer jacket is employed it is preferred that a butt seam be employed for the outer jacket, although lap or lock seams may also be employed. When a butt seam is employed, the folding of the jacket over the ends of the container to lock the covers thereto may cause such seam to split. However, the sealing integrity of such seam may be ensured by depositing a layer of an adhesive material between the container and the jacket in the seam area.

The sealing lip of the closure member may define one or more radial indentations in its upper surface. When a tightly fitted cover is employed in conjunction with a rigid metal jacket, the presence of such indentations may be necessary for the lip to deflect and the cell to vent.

The present invention will become more apparent from the following description thereof when considered together with the accompanying drawing which is set forth as being exemplary of the present invention and is not intended to be limitative thereof in any respect.

Brief Description of the Drawing

FIGURE 1 is a cross-sectional view of a closure member of the cell of the present invention in its as-molded form, of a construction particularly useful in cells of the Leclanche or zinc chloride type.

FIGURE 2 is a partial sectional view of a D-size cell employing the low profile seal construction of this invention, utilizing the closure member of FIGURE 1.

Detailed Description of the Drawing

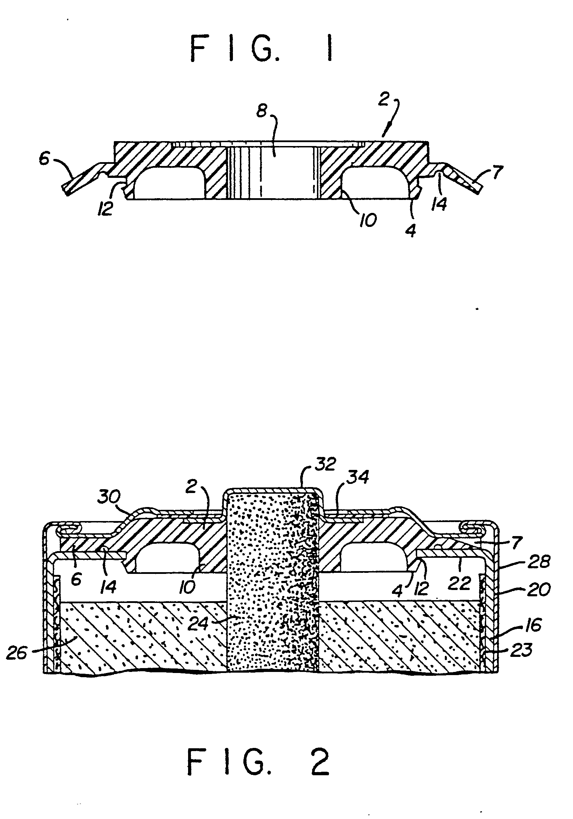

Referring now to FIGURE 1, closure member 2 is comprised of annular flange 4 and sealing lip 6. Typically, closure member 2 will define central hole 8, which hole is of a diameter such that an electrode, e.g., a carbon rod, may be force-fitted therethrough. In order to improve the seal of the closure member about such electrode, closure member 2 may further comprise inner circular flanged hub 10 extending about central hole 8, which hub may be beveled in part to ease insertion of the central electrode through said hole. At the junction of hub 10 and the central electrode there may be placed silicone grease or other sealant or adhesive type material to seal such juncture.

Annular flange 4 defines circumferential notch 12 in its outside face. Flange 4 is positioned such that the inwardly turned peripheral edge of the cell container may be inserted into circumferential notch 12.

Circumferential groove 14 is defined in the inner surface of sealing lip 6. This groove functions as a hinge and permits sealing lip 6 to function as a flapper valve. Moreover, said sealing groove additionally functions as a gas distribution channel. Sealing lip 6 is molded at an angle, typically about 30° for polypropylene, and therefore exerts sealing pressure when substantially horizontally disposed in the assembled cell. In some embodiments of this invention, one or more radial indentations 7 are defined in the outer surface of the sealing lip.

Referring in detail to FIGURE 2, the cell diagrammed is composed of cylindrical container 16, which container 16 is comprised of a closed end (not shown), upstanding wall 20, and inwardly turned peripheral edge portion 22. Inwardly turned peripheral portion 22 is inwardly crimped at an angle of about 90° relative to upstanding wall 20. Disposed inside container 16, which is composed of a consumable metal anode such as zinc, is central carbon rod 24, which is surrounded by depolarizer mix 26. Depolarizer mix 26 is separated from container (anode) 16 by a separator 23.

Closure member 2 is disposed over the open end of container 16, with carbon rod 24 being force-fitted through the central hole defined by said closure member. Inner circular flanged hub 10 forms a seal with carbon rod 24. This seal may be aided by disposing silicone grease or other sealant or adhesive type material at such juncture.

Annular flange 4 defines circumferential notch 12 in its outside face, and is positioned such that the end of turned in peripheral edge portion 22 is inserted into notch 12.

Sealing lip 6 extends substantially parallel to and is in contiguous sealing relationship with the outer surface of inwardly turned peripheral edge portion 22. This seal may be aided by the deposition of silicone grease or similar sealing material. Circumferential groove 14 is defined in the inner surface of sealing lip 6.

Outer jacket 28, which may be composed of paper or of insulated metal, is disposed around, and extends beyond upstanding wall 20 of container 16. Cover 30 extends over closure member 2 and is locked to jacket 28 by conventional techniques. Preferably, however, a flat curl is utilized as this will provide for increased terminal clearance. As is shown in the figure a two-piece cover including metal electrode cap 32 and insulating washer 34 may be utilized. Cover 30 may or may not exert substantial pressure against sealing lip 6.

Having detailed the features of the cell of this invention, its manner of operation may now be described. Gas generated by the cell passes through the flange/peripheral edge portion of the cell container-interface and into circumferential groove 14. Pressure built up within the cell by such gas generation momentarily outwardly deflects sealing lip 6 thereby allowing the cell to be safely vented. Sealing lip 6 then reseals thereby preventing drying out of the cell as well as the ingress of oxygen from the atmosphere.

Examples
Example 1

Several "F" size paper-lined zinc chloride cell batteries (Sample A) were constructed with each including four cells employing the low profile seal of this invention. Each cell contained 89.2 grams of zinc chloride cathode mix; an eight gage zinc anode; a paper separator; a carbon rod electrode; and a propylene closure member similar to that diagrammed in Figure 1.

Additional batteries (Sample B) were constructed as above except that each cell contained 101 grams of the same cathode mix.

For comparative purposes, test data are provided for a number of lots of batteries (Sample C) made up of four cells each employing a closure member similar to the rim vent seal disclosed in US—A—3,802,923. Each cell contained 90 grams of the same cathode mix employed above, and the individual sealed cells were encased in a plastic shrink tube.

Fresh batteries of each type, along with batteries of each type which had been stored at 45°C for 3 months were discharged intermittently across a 9 ohm resistance according to two specific timing cycles. These cycles were (1) thirty minutes on drain, thirty minutes off drain, for eight hours per day and (2) thirty minutes on drain for one-half hour per day. These tests were continued until cutoff voltages of 3.0 volts and 2.6 volts were obtained. The results of such tests, in hours of actual discharge, are listed in Table I.

TABLE I

Service Data Testing[1]

| | | Fresh Batteries | | | | | | Stored Batteries[2] | | | | | |
|---|---|---|---|---|---|---|---|---|---|---|---|---|---|
| | | $9\Omega$ 30/30[3] | | | $9\Omega$ $\frac{1}{2}$ hr/day | | | $9\Omega$ 30/30 | | | $9\Omega$ $\frac{1}{2}$ hr/day | | |
| Sample | No.[4] | 3.0 Volts | 2.6 Volts | No. | 3.0 Volts | 2.6 Volts | No. | 3.0 Volts | 2.6 Volt | No. | 3.0 Volts | 2.6 Volts |
| A (low profile seal) | 2 | 18.0 | 20.7 | 2 | 20.1 | 21.5 | 2 | 18.2 | 20.8 | 2 | 20.3 | 21.3 |
| B (low profile seal) | 3 | 22.4 | 25.5 | 3 | 23.6 | 25.2 | 3 | 21.9 | 23.8 | 3 | 20.5 | 21.4 |
| C (rim vent seal) | 29 | 18.3 | 20.7 | 26 | 21.0 | 22.4 | 21 | 17.4 | 19.8 | 18 | 20.7 | 22.1 |

[1] In hours of actual discharge
[2] Batteries stored at 45°C for 3 months
[3] Test schedule was thirty minutes on drain/thirty minutes off drain for 8 hrs/day
[4] Number of batteries tested.

0 134 982

The results in Table I indicate that the cells of this invention possess fresh and delayed service maintenance levels which are comparable to cells having commercially utilized closures when both cells contain approximately equal amounts of cathode mix (Samples A and C). However, the low profile seal of this invention permits additional active material to be placed within the cell (Sample B), thereby generating about a 20% increase in fresh service and about a 9% increase in delayed service over such commercially utilized closure constructions.

Example 2

Additional batteries of each typee described in Example 1 were stored at 45°C, and the current of each was measured after 1, 3 and 6 month intervals. The results of such testing, in percentage of initial current maintenance, are listed in Table II.

TABLE II

Current Maintenance*

| Cell Sample | Number of Batteries | Month | | |
|---|---|---|---|---|
| | | 1 | 3 | 6 |
| A (low profile seal) | 3 | 81 | 73 | 61 |
| B (low profile seal) | 3 | 80 | 69 | 57 |
| C (control-rim vent seal) | 12 | 82 | 70 | 65 |

\* As percentage of initial current

The above results indicate that cells employing the low profile seal of this invention possess a current maintenance comparable to that achieved by commercially employed cell constructions.

**Claims**

1. A galvanic cell comprising a cylindrical container (16) having a closed end, an open end and an upstanding wall (20) with an inwardly turned peripheral edge portion (22), said edge portion (22) having an inner surface and an outer surface, said container including therein electrochemically active ingredients; and a closure member (2) disposed over the open end of said container (16), said closure member (2) comprising a resilient annular flange (4) extending toward the closed end of said container, said flange (4) defining an outer circumferential notch (12) and being positioned such that the inwardly turned peripheral edge portion (22) of the container (16) is inserted into said circumferential notch (12); characterized in that the inwardly turned peripheral edge portion (22) of the container (16) is inwardly crimped with a crimp radius of about 0,16 cm at an angle of between about 85° and about 95° relative to the upstanding wall (20) of the container, and said closure member (2) further comprises an outer sealing lip (6) which extends substantially parallel to and is in contiguous sealing relationship with the outer surface of the inwardly turned peripheral edge portion (22) of the container (16), said lip (6) having an inner face and defining a circumferential groove (14) in said inner face, such that the sealing lip (6) and inwardly turned peripheral edge portion (22) of the container (16) comprise a resealable venting means operable in that the buildup of pressure inside the cell beyond a predetermined limit will cause said sealing lip (6) to momentarily deflect, thereby permitting the release of such pressure from inside the cell.

2. The galvanic cell of claim 1, characterized in that the inwardly turned peripheral edge portion (22) of the cell container (16) is inwardly crimped at an angle of about 90°.

3. The galvanic cell of claim 1, characterized in that one or more radial indentations (7) are defined in the outer surface of the sealing lip (6).

4. The galvanic cell of claim 3, characterized in that an outer metal jacket (28) is disposed about the cell container (16) and is sealed utilizing a butt seam and wherein a layer of adhesive material is disposed between the cell container (16) and said metal jacket (28) in the seam area.

5. The galvanic cell of claim 4, characterized in that an outer cover (30) is disposed over the closure member (2) and is locked to the metal jacket (28) utilizing a flattened curl.

7

6. The galvanic cell of claim 1, characterized in that the closure member (2) is composed of a member of the group consisting of nylon, polyethylene and polypropylene.

7. A method for the production of galvanic cells having a resealable vent closure according to claim 1, comprising the steps of:

(a) assembling within a cylindrical container (16) having an open end, a closed end and an upstanding wall (20) the electrochemically active ingredients of the cell;

(b) inwardly crimping the peripheral edge portion (22) of said cylindrical container (16) such that said peripheral edge portion (22) is inwardly turned with a crimp radius of about 0.16 cm at an angle of between about 85° and about 95° relative to the upstanding wall (20) of the container (16) such that said peripheral edge portion (22) has an inner and an outer surface;

(c) providing a closure member (2) comprising a resilient annular flange (4), and a sealing lip (6) having an inner face; said flange (4) defining an outer circumferential notch (12), said sealing lip (6) defining in its inner face a circumferential groove (14); and

(d) locking said closure member (2) into place by inserting it over the open end of said cylindrical container (16) such that the end of the inwardly turned peripheral edge portion (22) of the cell container (16) is fitted into the circumferential notch (12) on said flange (4) such that said sealing lip (6) extends substantially parallel to and is in contiguous sealing relationship with the outer surface of the inwardly turned peripheral edge portion (22) of the container (16).

8. A method for the production of galvanic cells having a resealable vent closure according to claim 1, comprising the steps of:

(a) assembling within a cylindrical container (16) having an open end, a closed end and an upstanding wall (20) the electrochemically active ingredients of the cell;

(b) inwardly crimping the peripheral edge portion (22) of said cylindrical container (16) with a crimp radius of about 0.16 cm such that said peripheral edge portion (22) is inwardly turned at an angle of between about 30° and about 60° relative to the upstanding wall (20) of the container (16);

(c) providing a closure member (2) comprising a resilient annular flange (4), and a sealing lip (6) having an inner face; said flange (4) defining an outer circumferential notch (12), said sealing lip (6) defining in its inner face a circumferential groove (14); and

(d) locking said closure member (2) into place by inserting it over the crimped peripheral edge portion (22) of the cylindrical container (16) and further crimping said peripheral edge portion (22) with a crimp radius of about 0.16 cm such that said peripheral portion (22) is inwardly turned at an angle of between about 85° and about 95° relative to the upstanding wall (20) of the container such that said peripheral edge portion (22) has an inner and an outer surface and such that the end of the inwardly turned peripheral edge portion (22) of the cell container (16) is fitted into the circumferential notch (12) on said flange (4) such that said sealing lip (6) extends substantially parallel to and is in contiguous sealing relationship with the outer surface of the inwardly turned peripheral edge portion (22) of the container.

9. The method of claim 8, characterized in that the peripheral edge portion (22) of the cylindrical container (16) is inwardly crimped at an angle of about 45° relative to the upstanding wall (20) of the container (16) in step (b).

## Patentansprüche

1. Galvanische Zelle, die einen zylindrischen Behälter (16) mit einem geschlossenen Ende, einem offenen Ende und einer aufrechten Wandung (20) mit einem einwärts gerichteten peripheren Randabschnitt (22) aufweist, wobei der Randabschnitt (22) eine Innenfläche und eine Außenfläche aufweist und der Behälter elektrochemisch aktive Bestandteile enthält; und ein über dem offenen Ende des Behälters (16) angeordnetes Verschlußteil (2), welches einen federnden Ringflansch (4) aufweist, der sich zum geschlossenen Ende des Behälters erstreckt und eine äußere Umfangsnut (12) begrenzt und derart angeordnet ist, daß der einwärts gerichtete periphere Randabschnitt (22) des Behälters (16) in die Umfangsnut (12) eingeschoben ist, dadurch gekennzeichnet, daß der einwärts gerichtete periphere Randabschnitt (22) des Behälters (16) mit einem Krümmungsradius von etwa 0,16 cm bei einem Winkel zwischen etwa 85° und etwa 95° in bezug auf die aufrechte Wandung (20) des Behälters nach innen gebördelt ist, und das Verschlußteil (2) weiterhin eine äußere Dichtlippe (6) aufweist, die sich im wesentlichen parallel zu und in abdichtender Berührung mit der Außenfläche des einwärts gerichteten peripheren Randabschnittes (22) des Behälters (16) erstreckt, wobei die Lippe (6) eine Innenfläche aufweist und eine Umfangsrille (14) in dieser Innenfläche begrenzt, derart, daß die Dichtlippe (6) und der einwärts gerichtete periphere Randabschnitt (22) des Behälters (16) ein wiederabdichtbares Entgasungsmittel darstellen, das so arbeitet, daß der Druckaufbau innerhalb der Zelle über einen bestimmten Wert hinaus die Dichtlippe (6) vernlaßt, vorübergehend ausgelenkt zu werden, wodurch das Freigeben dieses Druckes vom Inneren der Zelle ermöglicht wird.

2. Galvanische Zelle nach Anspruch 1, dadurch gekennzeichnet, daß der einwärts gerichtete periphere Randabschnitt (22) des Zellenbehälters (16) mit einem Winkel von ungefähr 90° nach innen gebördelt ist.

3. Galvanische Zelle nach Anspruch 1, dadurch gekennzeichnet, daß eine oder mehrere radiale Vertiefungen (7) in der Außenfläche der Dichtlippe (6) angeordnet sind.

4. Galvanische Zelle nach Anspruch 3, dadurch gekennzeichnet, daß ein äußerer Metallmantel (28) um den Zellbehälter (16) herum angeordnet und abgedichtet ist durch Verwendung einer Stoßnaht und bei der eine Klebstoffschicht im Nahtbereich zwischen dem Zellenbehälter (16) und dem Metallmantel (28) angeordnet ist.

5. Galvanische Zelle nach Anspruch 4, dadurch gekennzeichnet, daß ein Außendeckel (30) über dem Verschlußteil (2) angeordnet und mit dem Metallmantel (28) mittels eines abgeflachten Falzes verbunden ist.

6. Galvanische Zelle nach Anspruch 1, dadurch gekennzeichnet, daß das Verschlußteil (2) aus einem Teil aus Nylon, Polyethylen oder Polypropylen gebildet ist.

7. Verfahren zum Herstellen galvanischer Zellen mit einem wiederabdichtenden Entgasungsverschluß nach Anspruch 1, mit den Verfahrensschritten:

(a) Anordnen der elektrochemisch aktiven Bestandteile der Zelle innerhalb eines zylindrischen Behälters (16), der ein offenes Ende, ein geschlossenes Ende und eine aufrechte Wandung (20) aufweist;

(b) Einwärtsbördeln des peripheren Randabschnittes (22) des zylindrischen Behälters (16) derart, daß der periphere Randabschnitt (22) mit einem Radius von etwa 0,16 cm und einem Winkel zwischen etwa 85° und etwa 95° bezogen auf die aufrechte Wandung (20) des Behälters (16) einwärts umgebogen wird, so daß der periphere Randabschnitt (22) eine innere und eine äußere Fläche aufweist;

(c) Bereitstellen eines Verschlußteils (2) mit einem federnden Ringflansch (4) und einer Dichtlippe (6) mit einer Innenfläche; wobei der Flansch (4) eine äußere Umfangsnut (12) und die Ditchlippe (6) in ihrer Innenfläche eine Umfangsrille (14) begrenzt; und

(d) Verriegeln des Verschlußteils (2) in seiner Position durch dessen Einsetzen über das offene Ende des zylindrischen Behälters (16) derart, daß das Ende des einwärts gerichteten peripheren Randabschnittes (22) des Zellbehälters (16) in die Umfangsnut (12) des Flansches (4) eingepaßt wird, so daß die Dichtlippe (6) sich im wesentlichen parallel zum und in abdichtender Berührung mit der Außenfläche des einwärts gerichteten peripheren Randabschnittes (22) des Behälters (16) erstreckt.

8. Verfahren zum Herstellen galvanischer Zellen mit einem wiederabdichtenden Entgasungsverschluß nach Anspruch 1, mit den Verfahrensschreitten:

(a) Anordnen der elektrochemisch aktiven Bestandteile der Zelle innerhalb eines zylindrischen Behälters (16), der ein offenes Ende, ein geschlossenes Ende und eine aufrechte Wandung (20) aufweist;

(b) Einwärtsbördeln des peripheren Randabschnittes (22) des Behälters (16) mit einem Krümmungsradius von etwa 0,16 cm, derart, daß der periphere Randabschnitt (22) mit einem Winkel zwischen etwa 30° und etwa 60° bezogen auf die aufrechte Wandung (20) des Behälters (16) einwärts gebogen wird;

(c) Bereitstellen eines Verschlußteiles (2) mit einem federnden Ringflansch (4) und einer Dichtlippe (6) mit einer Innenfläche; wobei der Flansch (4) eine äußere Umfangsnut (12) und die Dichtlippe (6) in ihrer Innenfläche eine Umfangsrille (14) begrenzt; und

(d) Verriegeln des Verschlußteils (2) in seiner Position durch dessen Einsetzen über den gekrümmten peripheren Randabschnitt (22) des zylindrischen Behälters (16) und weiteres Bördeln des peripheren Randabschnittes (22) mit einem Krümmungsradius von etwa 0,16 cm derart, daß der periphere Abschnitt (22) mit einem Winkel zwischen etwa 85° und etwa 95° bezogen auf die aufrechte Wandung (20) des Behälters einwärts gebogen wird, so daß der periphere Randabschnitt (22) eine innere und eine äußere Fläche aufweist und daß das Ende des einwärts gerichteten peripheren Randabschnittes (22) des Zellbehalters (16) in die Umfangsnut (12) am Flansch (4) eingapaßt wird, derart, daß sich die Dichtlippe (6) im wesentlichen parallel zum und in abdichtender Berührung mit der Außenfläche des einwärts gerichteten peripheren Randabschnittes (22) des Behälters erstreckt.

9. Verfahren nach Anspruch 8, dadurch gekennzeichnet, daß der periphere Randabschnitt (22) des zylindrischen Behälters (16) mit einem Winkel von etwa 45° bezogen auf die aufrechte Wandung (20) des Behälters (16) gemäß Schritt (b) einwärts gebördelt wird.

## Revendications

1. Pile galvanique comportant un conteneur cylindrique (16) qui comprend une extrémité fermée, un extrémité ouverte et une paroi droite (10) avec une partie de bord périphérique (22) tournée vers l'intérieur, ladite partie de bord (22) comprenant une surface intérieure et une surface extérieure, ledit conteneur contenant des ingrédients actifs électrochimiquement; et une pièce de fermeture (2) disposée sur l'extrémité ouverte dudit conteneur (16), ladite pièce de fermeture (2) comportant un rebord annulaire élastique (4) dirigé vers l'extrémité fermée dudit conteneur, ledit rebord (4) délimitant une encoche circonférentielle extérieure (12) et étant positionné de manière que la partie de bord périphérique (22) tournée vers l'intérieur du conteneur (16) soit introduite dans ladite encoche circonférentielle (12); caractérisée en ce que la partie de bord périphérique (22) tournée vers l'intérieur du conteneur (16) est sertie vers l'intérieur avec un rayon de sertissage d'environ 0,16 cm, sous un angle compris entre environ 85° et environ 95° par rapport à la paroi droite (20) du conteneur et ladite pièce de fermeture (2) comportant en outre un lèvre d'étanchéité extérieure (6) disposée pratiquement parllèlement à la surface extérieure de la partie de bord périphérique (22) tournée vers l'intérieur du conteneur (16) et en relation d'etanchéité continguë avec elle, ladite lèvre (6) ayant un face intérieure et délimitant une rainure circonférentielle (14) dans ladite face intérieure, de manière que ladite lèvre d'étanchéité (6) et la partie de bord périphérique (22) tournée vers l'intérieur du conteneur (16) forment un dispositif d'évacuation pouvant se refermer, fonctionnant de manière que l'accumulation d'une pression à l'intérieur de la pile, au-delà d'une limite prédéterminée, entraîne que ladite lèvre d'étanchéité (6) se déforme momentanément en permettant ainsi la libération de ladite pression de l'intérieur de la pile.

2. Pile galvanique selon la revendication 1, caractérisée en ce que la partie de bord périphérique (22) tournée vers l'intérieur du conteneur (16) de la pile est sertie vers l'intérieur sous un angle d'environ 90°.

3. Pile galvanique selon la revendication 1, caractérisée en ce qu'une ou plusieurs ondulations radiales (7) sont définies dans la surface extérieure de la lèvre d'étanchéité (6).

4. Pile galvanique selon la revendication 3, caractérisée en ce qu'une gaine métallique extérieure (28) est disposée autour du conteneur (16) de la pile et est fermée hermétiquement en utilisant un cordon de soudure en bout et dans laquelle une couche de matière adhésive est disposée entre le conteneur (16) de la pile et ladite gaine métallique (28) dans la région du cordon de soudure.

5. Pile galvanique selon la revendication 4, caractérisée en ce qu'un couvercle extérieur (30) est dipsosé sur la pièce de fermeture (2) et est bloqué sur la gaine métallique (28) en utilisant un repli aplati.

6. Pile galvanique selon la revendication 1, caractérisée en ce que la pièce de fermeture (2) est faite d'un élément du groupe comprenant le "Nylon", le polyéthylène, et le polypropylène.

7. Procédé de production de piles galvaniques comprenant une fermeture à orifice d'évacuation pouvant se refermer, selon la revendication 1, consistant essentiellement:

(a) à assembler dans un conteneur cylindrique (16) comprenant une extrémité ouverte, un extrémité fermée et une paroi droite (20) les ingrédients actifs électrochimiquement de la pile;

(b) à sertir vers l'intérieur la partie de bord périphérique (22) dudit conteneur cylindrique (16) de manière que ladite partie de bord périphérique (22) soit tournée vers l'intérieur avec un rayon de sertissage d'environ 0.16 cm, sous un angle compris entre environ 85° et environ 95° par rapport à la paroi droite (20) du conteneur (16) de manière que ladite partie de bord périphérique (22) comporte une surface intérieure et une surface extérieure;

(c) à prévoir une pièce de fermeture (2) comportant un rebord annulaire élastique (4) et un lèvre d'étanchéité (6) avec une face intérieure, ledit rebord (4) délimitant une encoche circonférentielle extérieure (12), ladite lèvre d'étanchéité (6) délimitant à sa face intérieure une rainure circonférentielle (14); et

(d) à bloquer ladite pièce de fermeture (2) en position en l'insérant sur l'extrémité ouverte dudit conteneur cylindrique (16) de manière que l'extrémité de la partie de bord périphérique (22) tournée vers l'intérieur du conteneur (16) de la pile soit ajustée dans l'encoche circonférentielle (12) sur ledit rebord (4), pour que ladite lèvre d'étanchéité (6) soit pratiquement parallèle à la surface extérieure de la partie de bord périphérique (22) tournée vers l'intérieur du conteneur (16) et en relation d'étanchéité contiguë avec elle.

8. Procédé de production de piles galvaniques comprenant une fermeture avec un orifice d'évacuation pouvant se refermer, selon la revendication 1, consistant essentiellement:

a) à assembler, dans un conteneur cylindrique (16) comprenant une extrémité ouverte, une extrémité fermée et une paroi droite (20), les ingrédients actifs électrochimiquement de la pile.

b) à sertir vers l'intérieur la partie de bord périphérique (22) dudit conteneur cylindrique (16) avec un rayon de sertissage d'environ 0,16 cm de manière que ladite partie de bord périphérique (22) soit tournée vers l'intérieur sous un angle compris entre environ 30° et environ 60° par rapport à la paroi droite (20) du conteneur (16).

c) à prévoir une pièce de fermeture (2) comportant un rebord annulaire élastique (4) et une lèvre d'étanchéité (6) avec une face intérieure, ledit rebord (4) délimitant une encoche circonférentielle extérieure (12), ladite lèvre d'étanchéité (6) délimitant à sa face intérieure une rainure circonférentielle (14), et

d) à bloquer ladite pièce de fermeture (2) en position en l'insérant sur la partie de bord périphérique sertie (22) du conteneur cylindrique (16) et en sertissant encore ladite partie de bord périphérique (22) avec un rayon de sertissage d'environ 0.16 cm de manière que ladite partie périphérique (22) soit tournée vers l'intérieur sous un angle compris entre environ 85° et environ 95° par rapport à la paroi droite (20) du conteneur, que ladite partie périphérique (22) comporte une surface intérieure et une surface extérieure et que l'extrémité de la partie de bord périphérique (22) tournée vers l'intérieur du conteneur (16) de la pile soit ajustée dans l'encoche circonférentielle (12) sur ledit rebord (4) pour que ladite lèvre d'étanchéité (6) soit pratiquement parallèle à la surface extérieure de la partie de bord périphérique (22) tournée vers l'intérieur du conteneur et en relation d'étanchéité continguë avec elle.

9. Procédé selon la revendication 8, caractérisé en ce que ladite partie de bord périphérique (22) du conteneur cylindrique (16) est sertie vers l'intérieur sous un angle d'environ 45° par rapport à la paroi droite (20) du conteneur (16) à la phase (b).

# F I G. 1

# F I G. 2